# NEUE EUROPÄISCHE PATENTSCHRIFT

(11) **EP 1 927 559 B2**
(45) Veröffentlichungstag und Bekanntmachung des Hinweises auf die Entscheidung über den Einspruch: **27.05.2015**
(45) Hinweis auf die Patenterteilung: 14.01.2009
(21) Anmeldenummer: 06024709.5
(22) Anmeldetag: 29.11.2006
(51) Int. Cl.: B65G 47/34, B65G 47/82, B65G 17/08

(54) **Gruppiertisch zum Zusammenführen von Gebinden**
Grouping table for bringing together packages
Table de regroupement pour mettre ensemble des récipients

(43) Veröffentlichungstag der Anmeldung: 04.06.2008
(73) Patentinhaber: Schaefer Förderanlagen- und Maschinenbau GmbH, 85774 Unterföhring (DE)
(72) Erfinder: Lahartinger, Reinhold, 83052 Bruckmühl (DE); Kötzinger, Hubert, 88682 Salem (DE)
(74) Vertreter: Thoma, Michael

(56) Entgegenhaltungen:
- EP-A1- 0 172 745
- EP-B1- 0 979 204
- WO-A1-2004/078621
- DD-A1- 229 378
- DE-A1- 2 161 081
- DE-A1- 3 107 495
- DE-A1- 3 810 318
- DE-A1- 3 839 616
- DE-A1- 10 202 126
- DE-T2- 69 411 676
- FR-A1- 2 506 733
- SU-A1- 652 041
- US-A- 2 554 038
- US-A- 2 768 756
- US-A- 4 724 950
- US-A- 4 889 227

## Beschreibung

Die Erfindung betrifft einen Gruppiertisch zum Zusammenführen von Gebinden, insbesondere Schrumpfpacks, zur Schichtenbildung umfassend einen Zuförderer, einen dem Förderer nachgeordneten taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz. Ein solcher Gruppiertisch ist beispielsweise aus der US 2,768,756 bekannt.

Bekannt sind Gruppiertische zum Zusammenführen von Gebinden, wie z. B. Kartons, Schrumpfpacks, Trays und Kunststoffkisten, die als Rollenbahnen ausgeführt sind. Das Zusammenführen der Gebinde kann in der Weise erfolgen, dass diese in eine zweidimensionale Formation (Blockbildung, z. B. Palettenschicht) gebracht werden. Dies geschieht dadurch, indem die Rollenbahn aus einer oder mehreren Gassen linear versorgt wird. Die Gebinde werden sodann je nach Bedarf vor oder auf dem Rollenförderer gedreht und auf dem Rollenförderer mechanisch durch Stoppstellen in der erforderlichen Position angeordnet. Die so angeordneten Gebinde werden dann rechtwinklig zur Transportrichtung vom Rollenförderer abgeschoben. Zulauf, Anordnung und Abschieben der Gebinde werden als ein Zyklus betrachtet. Zur Zusammenstellung einer Schicht werden ein oder mehrere Zyklen benötigt. Bei dieser bekannten Ausführung ist durch unsanftes Aufprallen der Gebinde auf die Stoppstellen eine produktschonende Verarbeitung der Gebinde nicht gewährleistet.

Um eine produktschonendere Verarbeitung zu realisieren, ist es auch bekannt, die Förderer als Mattenkettenbahnen mit geschlossener Oberfläche auszuführen. Dabei wird die Anordnung der Gebinde zueinander nicht mehr durch Stoppstellen realisiert, sondern durch gezieltes Weitertakten des Mattenförderers für die Reihenbildung. Da hier nicht mehr auf eine mechanische Bewegungsverhinderung durch einen Anschlag zurückgegriffen wird, können die Gebinde jedoch bei höheren Geschwindigkeiten in Transportrichtung verrutschen mit der Folge, daß die Gebinde beim Abschieben zur Schichtbildung nicht mehr ordnungsgemäß ineinandergreifen. Dies kann sich aber auf die Standfestigkeit eines aus mehreren Schichten gebildeten Stapels sehr nachteilig auswirken. Damit die Gebinde auf der Mattenbahn nicht verrutschen, sind der zulässigen Bremsverzögerung und der Geschwindigkeit des Mattenförderers physikalische Grenzen gesetzt. Eine Erhöhung des Reibungskoeffizienten schafft keine Abhilfe, weil dadurch das seitliche Abschieben unmäßig erschwert würde.

Aus der DE 38 10 318 C2 ist ein Gruppiertisch zum Zusammenführen von Gebinden bekannt, umfassend einen kontinuierlich antreibbaren Förderer, eine dem Förderer nachgeordnete Überschubstation, eine seitlich neben der Überschubstation angeordnete Zwischenstation, eine der Überschubstation zugeordnete rechtwinklig zur Förderrichtung wirksame Abschiebeeinrichtung zum gruppenweisen Überführen der ihre Lage zueinander behaltenden Gebinde auf die Zwischenstation, und einen seitlich neben der Zwischenstation angeordneten Schichtenbildungsplatz. In der Zwischenstation erfolgt die gewünschte Zeilenformation, wie sie gemäß einem Programm vorgegeben ist. Zu diesem Zweck wird ein Schieber durch einen Zwischenraum einer Stützfläche hindurch angehoben und hinter das gewünschte Gebinde angelegt. Die von der Überschubstation gruppenweise zugeführten Gebinde werden mittels des Schiebers in der Förderrichtung um den erforderlichen Abstand zueinander verschoben, um sie auf den entsprechenden Abstand zu bringen. Die so gebildete Gebindezeile wird sodann auf den Schichtenbildungsplatz geschoben.

Der Erfindung liegt die Aufgabe zugrunde, den gattungsgemäßen Gruppiertisch so weiterzubilden, daß sich trotz hoher Leistung bei der Schichtenbildung gut geordnete Schichten ergeben.

Diese Aufgabe wird dadurch gelöst, daß die Gebinde in Transportrichtung gegen ein Verrutschen geschützt sind, daß die unter den Gebinden befindliche Oberseite des Schrittförderers ein Profil hat, das einem Verschieben der Gebinde in Förderrichtung einen größeren Widerstand entgegensetzt als in Abschieberichtung.

Durch diese Ausbildung des Schrittförderers lassen sich auf einfache Weise die widersprüchlichen Anforderungen erfüllen, daß die Gebinde einerseits in Transportrichtung gegen ein Verrutschen gesichert sein sollen, sich aber andererseits quer zur Förderrichtung, d. h. in Abschieberichtung bei möglichst geringem Widerstand verschieben lassen sollen. Da die Oberseite des Schrittförderers einem Verschieben der Gebinde in Förderrichtung einen großen Widerstand entgegensetzt, sind die Gebinde auch bei starken Beschleunigungen gegen ein Verrutschen geschützt. Der taktweise angetriebene Schrittförderer kann daher rasch auf eine große Fördergeschwindigkeit beschleunigt und wieder abgebremst werden, um die Gebinde in die zur Schichtbildung erforderliche Position zu bringen. Dies ermöglicht eine Steigerung der Leistungsfähigkeit des Gruppiertisches.

Das lösungsgemäße Grundprinzip ist in der Weise verwirklicht, daß der Schrittförderer als Mattenförderer ausgebildet ist, dessen Oberseite in Abschieberichtung verlaufende Rippen aufweist. Die Gebinde, wie z. B. Schrumpffolienverpackungen von Getränkeflaschen, oder Kartons, gelangen mit diesen Rippen in Förderrichtung in einen formschlüssigen Eingriff, weil sich die Kanten dieser Rippen in das Gebinde eingraben oder mit Vorsprüngen des Gebindes, beispielsweise Falzränder von Kartons, in Eingriff gelangen. Andererseits lassen sich die Gebinde beim Abschieben auf den Rippen leicht verschieben, weil diese in Abschieberichtung verlaufen, so daß lediglich eine Gleitreibung auftritt.

Zur Steigerung des Formschlusses in Bewegungsrichtung der Mattenbahn können die Rippen sequentiell unterschiedlich hoch sein. Dadurch wird eine ungleiche Verteilung der Abstützkräfte erreicht, so daß der Formschluß zwischen den erhöhten Rippen und den Gebinden verbessert wird.

Die Rippen können über die Breite des Mattenförderers durchgehend sein. Vorzugsweise sind die Rippen jedoch über die Breite des Mattenförderers unterbrochen. Dabei ist es besonders vorteilhaft, wenn die einzelnen Abschnitte benachbarter Rippen gegeneinander versetzt sind. Ein derartiges Profil des Mattenförderers begünstigt den angestrebten formschlüssigen Eingriff des Mattenförderer mit den Gebinden in Förderrichtung.

Um andererseits das Abschieben der Gebinde nicht zu behindern und ein Verhaken derselben an den Rippenabschnitten zu vermeiden, sollten diese vorzugsweise in Abschieberichtung ansteigen.

Zu dem gleichen Zweck ist vorgesehen, daß die in Abschieberichtung vorderen oberen Ecken der Rippenabschnitte abgerundet oder abgeschrägt sind.

Zwei bevorzugte Ausführungsbeispiele der Erfindung sind in der Zeichnung dargestellt und werden nachfolgend näher erläutert. Es zeigt:
Fig. 1 eine schematische Draufsicht auf einen Gruppiertisch,
Fig. 2 eine Draufsicht auf den bei dem Gruppiertisch nach Fig. 1 verwendeten Mattenförderer,
Fig. 3 eine Seitenansicht des Mattenförderers nach Fig. 2, und
Fig. 4 einen Schnitt quer zur Förderrichtung durch einen abgewandelten Mattenförderer.

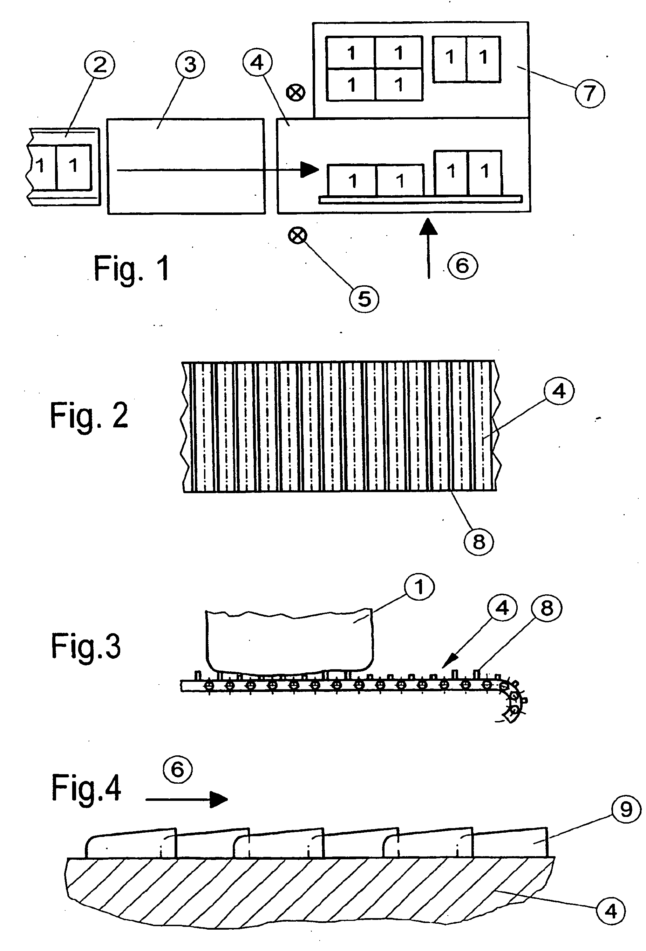

Der in Fig. 1 in der Draufsicht gezeigte Gruppiertisch dient zum Zusammenführen von Gebinden 1, wie z. B. Kartons, Schrumpfpacks, Trays oder Kunststoffkisten, die auf einem kontinuierlich antreibbaren Förderer 2, beispielsweise einem Rollenförderer, zugeführt werden. Von dem Förderer 2 werden die Gebinde 1 auf einen ebenfalls kontinuierlich angetriebenen Förderer 3 überführt, dem eine (nicht gezeigte) Wendeeinrichtung, beispielsweise ein Wendebügel oder dergleichen zugeordnet ist. Diese Wendeeinrichtung ermöglicht es, ausgewählte Gebinde um 90° zu verdrehen. Die Gebinde können aber auch bereits einzeln vorgedreht auf dem Förderer 2 zugeführt werden. Die Gebinde 1 werden von dem Förderer 3 auf einen mit variabler Schrittweite taktweise antreibbaren Mattenförderer 4 überführt. Von dem Mattenförderer 4 werden die zugeführten Gebinde 1 in eine definierte vorbestimmte Endstellung gebracht. Zu diesem Zweck ist dem Antriebsmotor des Mattenförderers 4 eine Steuereinheit zugeordnet. Beispielsweise kann eine Lichtschranke 5 vorgesehen sein, die das Passieren eines Gebindes 1 registriert. Da die Abmessungen des Gebindes und die Fördergeschwindigkeit des Mattenförderers 4 bekannt sind, läßt sich die zur Erzielung der gewünschten Endposition des Gebindes erforderliche Zeit bis zum Abschalten des Mattenförders 4 genau bestimmen. Durch diese getaktete Betreibsweise des Mattenförderers 4 lassen sich die Gebinde 1 in die gezeigte Endposition bringen, in der sie paarweise um 90° gegeneinander verdreht sind. Die in dieser Weise angeordneten vier Gebinde 1 werden sodann mit einer Abschiebeeinrichtung 6 rechtwinklig zum Mattenförderer 4 auf einen Schichtenbildungsplatz 7 überführt. Vom Schichtenbildungsplatz 7 wird die gebildete Schicht einer Beladestation zugeführt. Mit der Beladestation können Blöcke gebildet werden.

Die vorstehend beschriebene Konstruktion und Arbeitsweise eines Gruppiertisches ist bekannt und bedarf daher keiner näheren Erläuterung.

Wie aus den Fig. 2 und 3 hervorgeht, besteht der Mattenförderer 4 aus einer Vielzahl von gelenkig miteinander verbundenen Einzelabschnitten. Diese Einzelabschnitte sind in bekannter Weise durch Gelenkstäbe miteinander verbunden. Jeder dieser Einzelabschnitte hat auf seiner Oberseite eine sich über seine Länge, d. h. über die Breite des Mattenförderers 4 erstreckende Rippe 8. Wie aus Fig. 3 hervorgeht, sind die Rippen 8 sequentiell unterschiedlich hoch, d. h. bei dem gezeigten Ausführungsbeispiel folgen auf zwei hohe Rippen jeweils vier niedrigere Rippen. Das Gewicht der von dem Mattenförderer 4 zugeführten Gebinde wird daher hauptsächlich von den höheren Rippen 8 aufgenommen, so daß diese mit dem Gebinde eine formschlüssige Verbindung eingehen. Wegen dieser formschlüssigen Verbindung sind die Gebinde 1 gegen ein Verrutschen in Förderrichtung gesichert, wenn der Mattenförderer 4 zum Positionieren der Gebinde bis zum Stillstand abgebremst wird. Andererseits setzen die Rippen 8 den Gebinden 1 beim Abschieben mit der Abschiebeeinrichtung 6 nur einen sehr geringen Widerstand entgegen. Da die Rippen 8 in Abschieberichtung verlaufen, wird ein formschlüssiger Eingriff mit den Gebinden verhindert, so daß beim seitlichen Abschieben lediglich eine Gleitreibung auftritt. Die Rippen 8 haben eine Führungsfunktion, die ein Verdrehen oder seitliches Ausbrechen der Gebinde 1 beim Abschieben zu verhindern hilft.

In Fig. 4 ist eine Abwandlung gezeigt, bei der die Rippen 8 zur Steigerung des Formschlusses in einzelne Abschnitte 9 unterteilt sind. Dabei sind die einzelnen Abschnitte 9 benachbarter Rippen gegeneinander versetzt, so daß sie sich in Förderrichtung gesehen überlappen. Die Rippenabschnitte 9 haben ein ansteigendes Profil, so daß ihre Höhe in der durch einen Pfeil angedeuteten Abschieberichtung 6 zunimmt. Die in Abschieberichtung vorderen oberen Ecken der Rippenabschnitte 9 sind abgerundet, um scharfe Kanten zu vermeiden, an denen sich die Gebinde 1 verhaken könnten. Diese Ausbildung und die Anordnung der einzelnen Rippenabschnitte 9 bewirkt in Förderrichtung des Mattenförderers 4 einen verstärkten formschlüssigen Eingriff mit den (nicht gezeigten) Gebinden 1. Dieser verstärkte formschlüssige Eingriff hat seine Ursache darin, daß die Aufstandsfläche gegenüber einer durchgehend gleichförmig hohen Rippe verkleinert und damit der Anpreßdruck vergrößert wird. Diese Ausführungsform eignet sich besonders für Gebinde mit einer verhältnismäßig glatten Unterseite, wie z. B. Kartontrays. Durch die Vergrößerung des Anpreßdruckes dringen die Rippenabschnitte 9 leicht in die Unterseite der Gebinde ein. Die Gebinde 1 sind daher auch bei hohen Verzögerungskräften durch Starten und Stoppen des Mattenförderers 4 gegen ein Verrutschen gesichert. Andererseits können die Gebinde 1 mit der Abschiebeeinrichtung 6 ohne großen Kraftaufwand abgeschoben werden, da hierbei lediglich eine Gleitreibung auftritt. Wegen des geringen Reibwiderstandes können die Gebinde 1 ohne Ruckeln abgeschoben werden und es besteht auch keine Gefahr des Umfallens.

### Bezugszeichenliste:

- 1: Gebinde
- 2: Förderer
- 3: Förderer
- 4: Mattenförderer
- 5: Lichtschranke
- 6: Abschiebeeinrichtung
- 7: Schichtenbildungsplatz
- 8: Rippe
- 9: Rippenabschnitt

## Patentansprüche

1. Gruppiertisch zum Zusammenführen von Gebinden, insbesondere Schrumpfpacks, zur Schichtenbildung umfassend einen Zuförderer (3), einen dem Zuförderer nachgeordneten taktweise antreibbaren Schrittförderer (4), einen seitlich neben dem Schrittförderer angeordneten Schichtenbildungsplatz (7) und eine dem Schrittförderer zugeordnete rechtwinklig zur Förderrichtung wirksame Abschiebeeinrichtung (6) zum gruppenweisen Überführen der Gebinde (1) auf den Schichtenbildungsplatz (7), **dadurch gekennzeichnet, dass** der Schrittförderer (4) ein endlos umlaufendes Fördermittel aufweist, dessen die Gebinde tragende Oberseite ein Profil hat, das einem Verschieben der Gebinde (1) in Förderrichtung einen größeren Widerstand entgegensetzt als in Abschieberichtung, wobei der Schrittförderer ein Mattenförderer ist, dessen Oberseite in Abschieberichtung verlaufende Rippen (8) zum formschlüssigen Eingriff mit den Gebindeunterseiten aufweist.

2. Gruppiertisch nach Anspruch 1, **dadurch gekennzeichnet, dass** die Rippen (8) sequentiell unterschiedlich hoch sind.

3. Gruppiertisch nach Anspruch 1 oder 2, **dadurch gekennzeichnet, dass** die Rippen (8) über die Breite des Mattenförderers (4) unterbrochen sind.

4. Gruppiertisch nach Anspruch 3, **dadurch gekennzeichnet, dass** die einzelnen Abschnitte (9) benachbarter Rippen (8) gegeneinander versetzt sind.

5. Gruppiertisch nach Anspruch 3 oder 4, **dadurch gekennzeichnet, dass** die Rippenabschnitte (9) in Abschieberichtung ansteigen.

6. Gruppiertisch nach Anspruch 3, 4 oder 5, **dadurch gekennzeichnet, dass** die in Abschieberichtung vorderen oberen Ecken der Rippenabschnitte (9) abgerundet oder abgeschrägt sind.

## Claims

1. Configuration table for combining packs, in particular shrink-wrapped packs, in order to form layers, including a conveyor (3), this conveyor being followed by an intermediate driven pace conveyor (4), a layer forming table (7) located laterally next to the pace conveyor and a shifting device (6) acting rectangular to the conveying direction of the pace conveyor, to transfer the packs (1) in groups to the layer forming table (7), **characterised in that** the pace conveyor (4) features an endlessly revolving transport device of which the upper surface carrying the packs features a tread responding with a higher resistance to a displacement of the packs (1) in conveying direction than in shifting direction, wherein the pace conveyor is executed as a mat top conveyor the upper surface of which has ribs (8) orientated in shifting direction for positive engagement with the bottom side of the packs.

2. Configuration table according to claim 1, **characterised in** a sequentially different height of the ribs (8).

3. Configuration table according to claim 1 or 2, **characterised in that** the ribs (8) are discontinued over the width of the mat top conveyor (4).

4. Configuration table according to claim 3, **characterised in that** the sections (9) of adjacent ribs (8) are offset in relation to each other.

5. Configuration table according to claim 3 or 4, **characterised in that** the rib sections (9) rise in shifting direction.

6. Configuration table according to claim 3, 4 or 5, **characterised in that** the top edges of the rib sections (9) situated ahead in shifting direction are rounded or canted.

## Revendications

1. Table de groupement pour combiner des packs, en particulier des packs rétractés pour en former des couches, y inclus un convoyeur (3) suivi par un convoyeur à pas (4) à entraînement intermédiaire, une place de formation de couches (7) située latéralement à côté du convoyeur à pas et un dispositif pousseur (6) avec action rectangulaire à la direction de convoyage du convoyeur à pas, pour transférer les packs (1) regroupés à la place de formation de couches (7), **caractérisée en ce que** le convoyeur à pas (4) est équipé d'un moyen de transport circulant sans fin dont la surface portant les packs est équipée d'un profil répondant avec une résistance plus élevée à un déplacement des packs (1) en direction de convoyage qu'en direction de poussée, le convoyeur à pas étant un convoyeur à tapis dont la surface montre des nervures (8) orientées en direction de poussée pour engrènement positif avec les faces inférieures des packs.

2. Table de groupement selon la revendication 1, **caractérisée en ce que** les nervures (8) sont d'une hauteur différente en fonction des sections.

3. Table de groupement selon les revendications 1 ou 2, **caractérisée en ce que** les nervures (8) sont discontinues sur la largeur du convoyeur à tapis (4).

4. Table de groupement selon la revendication 3, **caractérisée en ce que** les sections (9) de nervures (8) avoisinées sont placées en quinconce l'une par rapport à l'autre.

5. Table de groupement selon les revendications 3 ou 4, **caractérisée en ce que** les sections de nervure (9) montent en direction de poussée.

6. Table de groupement selon les revendications 3, 4 ou 5, **caractérisée en ce que** les coins supérieurs des sections de nervure (9) situés en amont par rapport à la direction de poussée sont arrondis ou chanfreinés.
